(19) Europäisches Patentamt
European Patent Office
Office européen des brevets

(11) Publication number: **0 026 298**
**B1**

(12) **EUROPEAN PATENT SPECIFICATION**

(45) Date of publication of patent specification: **18.04.84**

(51) Int. Cl.$^3$: **A 23 K 1/16**, C 07 C 91/18, C 07 C 91/40, C 07 C 93/14

(21) Application number: **80104619.4**

(22) Date of filing: **06.08.80**

# (54) Method for promoting growth and reducing fat in animals using phenylethanolamine derivatives.

(30) Priority: **16.08.79 US 66908**
**16.08.79 US 66909**
**24.04.80 US 143069**
**24.04.80 US 143070**

(43) Date of publication of application:
**08.04.81 Bulletin 81/14**

(45) Publication of the grant of the patent:
**18.04.84 Bulletin 84/16**

(84) Designated Contracting States:
**BE CH DE FR GB IT LI NL SE**

(56) References cited:
**DE - A - 1 902 603**
**GB - A - 1 141 606**
**GB - A - 1 218 135**
**NL - A - 246 478**
**US - A - 3 536 712**
**US - A - 3 818 101**

**The file contains technical information submitted after the application was filed and not included in this specification**

(73) Proprietor: **AMERICAN CYANAMID COMPANY**
**1937 West Main Street P.O. Box 60**
**Stamford Connecticut 06904 (US)**

(72) Inventor: **Kiernan, Jane Ann**
**620 Madison Avenue**
**Dunellen New Jersey (US)**
Inventor: **Baker, Pamela Koenig**
**62 Hart Avenue**
**Hopewell New Jersey (US)**

(74) Representative: **Wächtershäuser, Günter, Dr. et al,**
**Tal 29**
**D-8000 München 2 (DE)**

(56) References cited:
**ARZNEIMITTEL FORSCHUNG, (Drug Res.) vol. 26, no. 7a, July 1976, pages 1420-1427 Aulendorf, DE. H. UEBERBERG et al.: "Tierexperimentelle Untersuchungen zur Verträglichkeit von NAB 365 (Clenbuterol)"**

**EP 0 026 298 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Method for promoting growth and reducing fat in animals using phenylethanolamine derivatives

Substitution products of certain 1-(aminodihalophenyl)-2-aminoethanes and the acid addition salts thereof are disclosed in United States Patent 3,536,712, issued on October 27, 1970. Specifically, patentees disclosed methods for the synthesis of said compounds and state that said compounds are useful for enhancing the blood circulation, and as bronchodilators, analgesies, sedatives, anti-pyretics, antiphlogistics and antitussives in warm-blooded animals. Patentees, however, exemplify only the analgesic utility. They do not indicate or suggest that said compounds are useful for lowering the deposition of fat or increasing the growth rate in warm-blooded animals, particularly farm and domestic animals, such as swine, poultry, dogs, sheep, goats, cats or cattle.

It has now been found that the growth rate and the depression of fat deposition of meat-producing animals such as swine, chickens, turkeys, domestic pets, rabbits, sheep, goats and cattle, including calves, can be increased and the efficiency of feed utilization thereby measurably improved by the oral or parenteral administration to said animals of an effective amount of a compound having the structure:

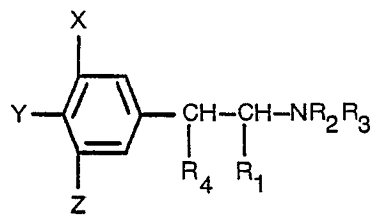

(I)

wherein X is hydrogen or halogen (fluorine, chlorine, iodine or bromine, but preferably chlorine or bromine; Y is hydrogen, $NH_2$ or $NHCOR_5$; Z is H, halogen (fluorine, chlorine, iodine or bromine, but preferably chlorine or bromine), or OH; $R_1$ is hydrogen or $C_1$—$C_4$ alkyl; $R_2$ is hydrogen, $C_1$—$C_4$ alkyl (straight or branched-chain) or $C_2$—$C_4$ alkenyl; $R_3$ is hydrogen, $C_1$—$C_6$ alkyl (straight or branched-chain), $C_3$—$C_6$ cycloalkyl, methoxypropyl, $C_2$—$C_5$ alkenyl, phenyl, 2-hydroxyethyl, $\alpha,\alpha$-dimethylphenethyl or benzyl; and when $R_2$ and $R_3$ are taken together with the nitrogen to which they are attached, they may represent morpholino or N'-$C_1$—$C_4$ alkylpiperazino; $R_4$ is hydrogen, hydroxyl or $OR_6$; $R_5$ is hydrogen or $C_1$—$C_4$ alkyl; $R_6$ is $C_1$—$C_6$ alkyl; with the provisos that when $R_3$ is phenyl, 2-hydroxyethyl, $\alpha,\alpha$-dimethylphenethyl, cycloalkyl $C_3$—$C_6$, benzyl or methoxypropyl, $R_2$ is hydrogen; and when Z is OH, X and Y are hydrogen; and Y is $NHCOR_5$, at least one of X and Z is hydrogen; and provided also that at least one of X, Y and Z represents a substituent other than hydrogen; racemic mixtures of the above-identified compounds and the optically active isomers and non-toxic, pharmacologically acceptable acid addition salts thereof.

Preferred compounds for use in the method of this invention have the above structure wherein X and Z are each chlorine or bromine; Y is hydrogen or $NH_2$; $R_1$ is hydrogen or $C_1$—$C_4$ alkyl; $R_4$ is hydroxyl; or a non-toxic, pharmacologically acceptable acid addition salt thereof.

The most preferred compounds for use in enhancing the growth rate of meat-producing animals and for improving the efficiency of feed utilization thereby are: 4-amino-$\alpha$-[(*tert*-butylamino)methyl]-3,5-dichlorobenzyl alcohol hydrochloride; 4-amino-3,5-dibromo-$\alpha$-[(diisopropylamino)methyl]benzyl alcohol hydrochloride; 4-amino-3,5-dichloro-$\alpha$-[(diisopropylamino)methyl]benzyl alcohol hydrochloride; 4-amino-3,5-dibromo-$\alpha$-[(*tert*-butylamino)methyl]-benzyl alcohol hydrochloride; 4-amino-3,5-dichloro-$\alpha$-[(methylamino)methyl]benzyl alcohol hydrochloride; 4-amino-3,5-dichloro-$\alpha$-[(allylamino)methyl]benzyl alcohol; 4-amino-3-bromo-$\alpha$-[(*tert*-butylamino)methyl]-5-chlorobenzyl alcohol hydrochloride; $\alpha$-[4-amino-3,5-dichlorophenyl]-4-morpholinoethanol hydrochloride; 4-amino-3-bromo-$\alpha$-[(*tert*-butylamino)methyl]-5-chlorobenzyl alcohol hydrochloride and $\alpha$-[(*tert*-butylamino)-methyl]-3,5-dichlorobenzyl alcohol hydrochloride.

It is found, that formula (I) compounds below (wherein Y is hydrogen) can be prepared by the condensation of an appropriately substituted styrene oxide with the appropriately substituted amine in the presence of an inert solvent, such as a lower alcohol at or near the boiling point of same, as shown below:

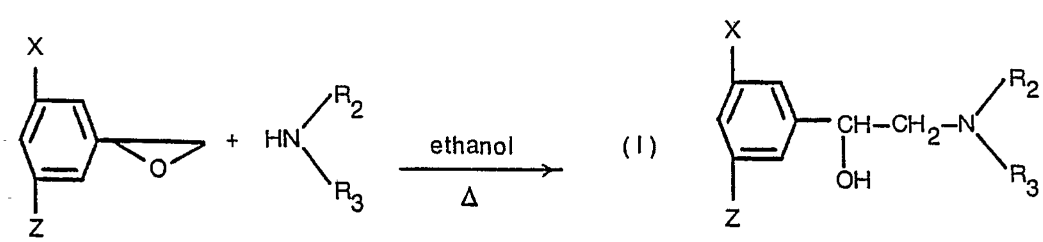

(I)

wherein X and Z are halogen, $R_2$ and $R_3$ are as hereinabove defined and Y is hydrogen. Thus, 3,5-dichlorostyrene oxide can be reacted with an equimolar or molar excess of *t*-butylamine in ethanol at reflux from 1 to 8 hours, or until the reaction is essentially complete and the desired α-[(*t*-butylamino)-methyl]-3,5-dichlorobenzyl alcohol is obtained as illustrated below:

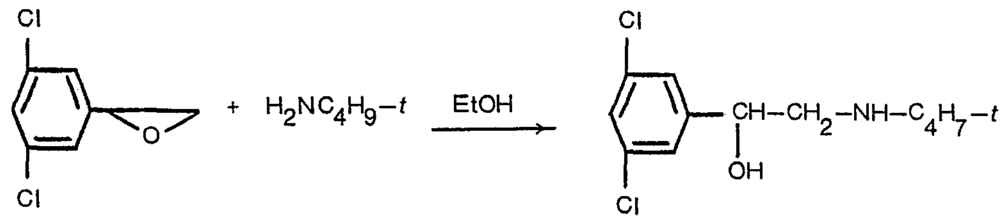


The thus obtained product can be purified by known procedures, such as chromatography or recrystallization of salt thereof.

Alternatively, a formula (I) compound wherein $R_4$ is $OR_6$ may be prepared by dissolving the corresponding formula (I) compound wherein $R_4$ is OH in the corresponding $R_6OH$ alcohol and saturating the thus obtained solution with dry HCl gas. The reaction mixture is then stirred at room temperature for a period of time sufficient to essentially complete the reaction and the product is then isolated by standard laboratory procedures and purified, if so desired. This reaction sequence may be illustrated as follows:

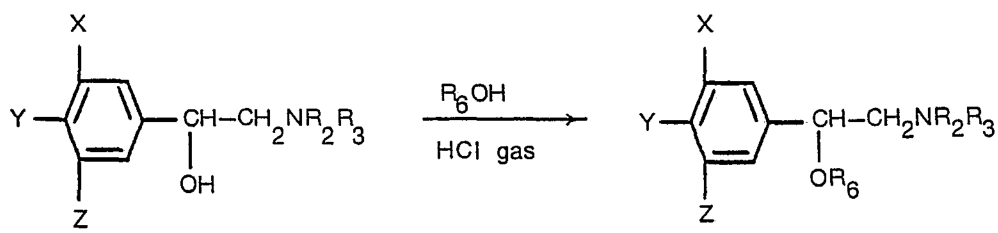

(I)

wherein X, Y, Z, $R_2$, $R_3$ and $R_6$ are as hereinabove defined.

In the present specification and claims the term α,α-dimethylphenethyl means a structure having the following configuration:

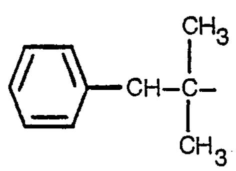

When orally administered in the feed, generally 0.01 to 300 grams per ton of feed of the above-identified phenylethanolamine derivative or acid addition salt thereof, is effective for enhancing the growth rate and improving the efficiency of feed utilization by the above-mentioned meat-producing animals.

Since the effective and preferred dietary levels of the active ingredient vary somewhat from species to species in the above-mentioned animals said levels for each animal species are listed in Table I below on a gram per ton of feed basis:

TABLE I

| Compound | Effective Feed Level g/ton | Preferred Level g/ton | Animal |
|---|---|---|---|
| Formula (I) | 0.1—300 | 1—200 | Swine |
| | 0.1—200 | 1—100 | Sheep, Goats |
| | 0.01—50 | 0.1—10 | Chickens, Rabbits |
| | 0.01—50 | 0.1—10 | Turkeys |
| | 0.1—200 | 1—100 | Cattle |

Animal feed compositions which will provide the desired growth promotion and feed efficiency in the above-mentioned animals can be prepared by admixing the phenylethanolamine derivative or acid addition salt thereof, or an animal feed supplement containing said compound, with a sufficient quantity of an appropriate animal feed to provide the desired level of active compound in said feed.

Animal feed supplements can be prepared by admixing 75% to 95% by weight of the phenylethanolamine derivative or acid addition salt thereof, with 5% to 25% by weight of a suitable carrier or diluent. Carriers suitable for use to make up the feed supplement compositions include the following: alfalfa meal, soybean meal, cotton-seed oil meal, linseed oil meal, sodium chloride, cornmeal, cane molasses, urea, bone meal, corncob meal and the like. The carrier promotes a uniform distribution of the active ingredient in the finished feed into which the supplement is blended. It thus performs an important function by ensuring proper distribution of the active ingredient throughout the feed.

If the supplement is used as a top dressing for feed, it likewise helps to ensure uniformity of distribution of the active material across the top of the dressed feed.

For parenteral administration the phenylethanolamine derivative may be prepared in the form of a paste or pellet and administered as an implant, usually under the skin of the heat or ear of the animal in which enhanced growth rate and/or improved efficiency of feed utilization is sought.

In practice, parenteral administration generally involved injection of a sufficient amount of the above-said ethane derivative to provide the animal with from 0.001 to 100 mg/kg of body weight of the active ingredient. The preferred dosage level for swine is 0.01 to 50 mg/kg of body weight and for cattle the range of from 0.001 to 50 mg/kg of body weight of the active phenylethanolamine derivative is preferred. The preferred dose level of said ethane derivative for poultry is 0.001 to 35 mg/kg of animal body weight and the preferred dose level of said ethanol derivative for sheep and goats is 0.001 to 40 mg/kg of animal body weight. The preferred dose level for rabbits and domestic pets is 0.001 to 35 mg/kg of animal body weight.

Paste formulations can be prepared by dispersing the active ethanol derivative in a pharmaceutically acceptable oil such as peanut oil, sesame oil, corn oil.

Pellets containing an effective level of the phenylethanolamine derivative can be prepared by admixing the abovesaid active ingredient with a diluent such as carbowax, biodegradable polymers, or carnuba wax. A lubricant, such as magnesium stearate or calcium stearate may be added to improve the pelleting process if desired.

It is, of course, recognized that more than one pellet may be administered to an animal to achieve the desired dose level which will provide the increased growth rate and/or improved efficiency of feed utilization by said animal. Moreover, it has been found that additional implants may also be introduced periodically during the treatment period in order to maintain the proper drug release rate in the animal's body.

In addition to enhanced growth promotion and improved efficiency of feed utilization by meat-producing animals, the compounds of the present invention have the added advantage that, at selected levels of administration they depress the deposition of fat in said animals. This biological response has substantial advantage to poultrymen and swine producers since administration of said compounds at selected levels yields leaner animals which command premium prices from the meat industry.

The invention has several advantages for the pet owner or veterinarian who wishes to trim unwanted fat from pet animals. For poultry men and swine raisers, using the method of the present invention were attained increased yields of leaner animals which command higher prices from the meat industry. Surprisingly, it is also noted that feed efficiency and animal growth rate are significantly enhanced when the compounds of the present invention are administered to swine and poultry at selected dose levels.

The following examples illustrate the invention.

Example 1

*Evaluation of test compounds as animal growth promoters*

CF1 female mice from Carworth Farms are received when they are six weeks old. They are housed ten to a cage in air-conditioned rooms (22°C to 25°C) with automatically controlled lights, 14 hours on and 10 hours off. The basal diet used in these studies is Purina Laboratory Chow (see description below), which is supplied ad libitum. Water is also allowed ad libitum.

Thirteen days after arrival, the mice are weighed in groups of ten and assigned at random to the different treatments. The concentration of the different compounds in the diet is indicated in the following tables. Twelve days later the mice are weighed again and the experiment terminated. Test data are provided in Table II below wherein data are reported as percentage gain over controls. The following is a description of the diet to which the growth-promoting compounds were added.

DIET

*Guaranteed Analysis*

| | |
|---|---|
| Crude protein not less than | 23.0% |
| Crude fat not less than | 4.5% |
| Crude fibre not more than | 6.0% |
| Ash not more than | 9.0% |

*Ingredients*

Meat and bone meal, dried skimmed milk, wheat germ meal, fish meal, animal liver meal, dried beet pulp, ground extruded corn, ground oat groates, soybean meal, dehydrated alfalfa meal, cane molasses, animal fat preserved with BHA, vitamin $B_{12}$ supplement, calcium pantothenate, choline chloride, folic acid, riboflavin supplement, brewer's dried yeast, thiamin, nicacin, vitamin A supplement, D-activated plant sterol, vitamin E supplement, calcium carbonate, dicalcium phosphate, iodized salt, ferric ammonium citrate, iron oxide, manganous oxide, cobalt carbonate, copper oxide, zinc oxide.

TABLE II
Evaluation of Test Compounds as Animal Growth Promoters

| Dosage | Initial Mouse Wt. (g) | Final Mouse Wt. (g) | Gain (grams) | % Gain Over Control |
|---|---|---|---|---|
| 4-Amino-α-(*tert*-butyl-aminomethyl)-3,5-dichlorobenzyl alcohol hydrochloride | | | | |
| *(ppm in diet)* | | | | |
| 0 | 23.46 | 24.67 | 1.21 | |
| | 23.46 | 24.49 | 1.03 | |
| | 22.79 | 24.62 | 1.83 | |
| | 24.10 | 25.98 | 1.88 | |
| | 24.23 | 25.52 | 1.29 | |
| | 23.63 | 24.93 | 1.30 | |
| | 23.33 | 24.76 | 1.43 | |
| | 22.75 | 23.86 | 1.11 | |
| Control Average | 23.47 | 24.85 | 1.39 | — |
| 50 | 22.95 | 25.63 | 2.68 | |
| | 23.91 | 26.14 | 2.23 | |
| | 24.26 | 26.30 | 2.04 | |
| Average | 23.71 | 26.02 | 2.32 | +66.9 |
| 100 | 23.50 | 25.39 | 1.89 | |
| | 23.80 | 26.04 | 2.24 | |
| | 23.00 | 25.65 | 2.65 | |
| Average | 23.43 | 25.69 | 2.26 | +62.6 |
| 200 | 23.03 | 24.80 | 1.77 | |
| | 24.50 | 26.12 | 1.62 | |
| | 23.08 | 25.04 | 1.96 | |
| Average | 23.54 | 25.32 | 1.78 | +28.1 |

The procedure described above is repeated using control animals for each test. Twelve days after the tests are started the animals are weighed and the test terminated. The results of each test are reported in Table III below as weight gains for each test group and percent gain for each group over controls.

TABLE III
Evaluation of Test Compounds as Animal Growth Promoters

| Compound | Dosage (ppm) | Gain (grams) | % Gain Over Controls |
|---|---|---|---|
| 4-Amino-3,5-dibromo-α-[(*tert*-butylamino)-methyl]benzyl alcohol hydrochloride | 400 | 16.5 | +22.2 |
| | 200 | 20.4 | +51.1 |
| | 100 | 22.9 | +69.0 |
| | 50 | 23.3 | +72.6 |
| 4-Amino-3,5-dibromo-α-[(diisopropylamino)-methyl]benzyl alcohol hydrochloride | 200 | 20.2 | +46.4 |
| | 100 | 16.9 | +22.5 |
| P-amino-α-[(dimethylamino)methyl]benzyl alcohol | 200 | 17.6 | +28.3 |
| | 100 | 15.6 | +13.0 |
| P-amino-α-[(diisopropylamino)methyl]-benzyl alcohol hydrochloride | 200 | 16.5 | +18.7 |
| | 100 | 14.2 | + 2.2 |
| 4-Amino-3,5-dichloro-α-[(dimethylamino)-methyl]benzyl alcohol hydrochloride | 100 | 18.4 | + 7.6 |
| 4-Amino-3,5-dichloro-α[(diisopropylamino)-methyl]benzyl alcohol hydrochloride | 200 | 23.9 | +66.0 |
| | 100 | 21.3 | +47.9 |
| 4-Amino-3,5-dichloro-α-[(cyclohexylamino)-methyl]benzyl alcohol hydrochloride | 200 | 19.3 | +48.5 |
| | 100 | 16.3 | +25.4 |
| P-amino-α[(*tert*-butylamino)methyl benzyl alcohol | 200 | 19.6 | +88.5 |
| | 100 | 18.2 | +75.0 |
| | 50 | 17.9 | +72.1 |
| | 25 | 13.6 | +30.8 |
| 4-Amino-3,5-dichloro-α-[(methylamino)-methyl]benzyl alcohol hydrochloride | 200 | 15.6 | +54.5 |
| | 100 | 18.9 | +87.1 |
| *P*-amino-α-[(methylamino)methyl]benzyl alcohol hydrochloride | 100 | 14.8 | +18.4 |
| α-(4-Amino-3,5-dichlorophenyl)-4-morpholino-ethanol hydrochloride | 200 | 15.9 | +34.7 |
| | 100 | 14.0 | +18.6 |
| 4-Amino-α-[(*sec*-butylamino)methyl]-3,5-dichlorobenzyl alcohol | 200 | 13.2 | +16.8 |
| 4-Amino-3,5-dichloro-α-[(-3-methoxypropyl)-amino]methyl benzyl alcohol | 200 | 15.4 | +23.2 |
| | 100 | 23.0 | +84.0 |
| 4-Amino-3,5-dichloro-α[(diallylamino)methyl]-benzyl alcohol hydrochloride | 200 | 17.4 | +39.2 |
| | 100 | 18.4 | +47.2 |
| 4-Amino-3,5-dichloro-α-[(benzylamino)methyl]-benzyl alcohol hydrochloride | 200 | 10.6 | +19.1 |
| 4-Amino-α-[(butylamino)methyl]-3,5-dichloro-benzyl alcohol | 100 | 14.6 | +64.0 |
| 4-Amino-3,5-dichloro-α-[(4-methyl-1-piperazinyl)-methyl]benzyl alcohol | 200 | 9.4 | +5.6 |
| | 100 | 9.5 | +6.7 |
| 4-Amino-3,5-dichloro-α-[(isopropylamino)-methyl]benzyl alcohol | 200 | 13.1 | +26.0 |
| | 100 | 18.9 | +81.7 |

TABLE III (Continued)
Evaluation of Test Compounds as Animal Growth Promoters

| Compound | Dosage (ppm) | Gain (grams) | % Gain Over Controls |
|---|---|---|---|
| 4-Amino-α-(aminomethyl)-3,5-dichlorobenzyl alcohol hydrochloride | 100 | 13.4 | +19.0 |
| 4-Amino-3,5-dichloro-α-[(hexylamino)methyl]-benzyl alcohol | 200<br>100 | 16.8<br>19.2 | +15.9<br>+32.8 |
| α-[(*tert*-butylamino)methyl]-3,5-dichlorobenzyl alcohol hydrochloride | 200<br>100 | 19.3<br>20.2 | +33.1<br>+39.3 |
| 4-Amino-3,5-dichloro-α-[(diethylamino)methyl]-benzyl alcohol hydrochloride | 100 | 17.5 | +20.7 |
| α-[(allylamino)methyl]-4-amino-3,5-dichloro-benzyl alcohol | 200<br>100 | 16.8<br>17.1 | +118.2<br>+122.1 |
| 4-Amino-α-(anilinomethyl)-3,5-dichlorobenzyl alcohol | 200<br>100 | 20.7<br>17.5 | +25.5<br>+6.1 |
| 4-Amino-α-[1-*tert*-butylamino)ethyl]-3,5-dichlorobenzyl alcohol hydrochloride | 200<br>100 | 22.7<br>23.8 | +37.6<br>+44.5 |
| 4-Amino-3-bromo-α-[(*tert*-butylamino)methyl]-5-chloro-benzyl alcohol hydrochloride | 200<br>100 | 18.5<br>19.5 | +60.9<br>+69.6 |
| α-[(*tert*-butylamino)methyl]-*m*-hydroxybenzyl alcohol hydrochloride | 200<br>100 | 15.8<br>19.9 | +9.0<br>+37.2 |
| α-[(isopropylamino)methyl]-*m*-hydroxybenzyl alcohol hydrochloride | 400<br>200<br>100 | —<br>—<br>— | +54.4<br>+53.0<br>+39.7 |
| α-[(Amino)methyl]-*m*-hydroxybenzyl alcohol hydrochloride | 200<br>100 | —<br>— | +4.4<br>+30.7 |
| 4-Amino-N-*tert*-butyl-3,5-dichloro-β-methoxy-phenethyl hydrochloride | 200<br>50 | 18.8<br>21.6 | +37.2<br>+57.7 |

Example 2

*Evaluation of test compounds as animal growth promoters*

The procedure of Example 1 is used in this evaluation. The diet is the same as described in said example and data obtained are reported as percent gain over controls. Data are reported in Table IV below.

TABLE IV
Evaluation of Test Compounds as Animal Growth Promoters

| Dosage | Initial Wt. (g) | Final Wt. (g) | Gain (grams) | % Gain Over Control |
|---|---|---|---|---|
| 4-Amino-α-(*tert*-butylaminomethyl)-3,5-dichlorobenzyl alcohol hydrochloride | | | | |
| *(ppm in diet)* | | | | |
| 0 | 24.49 | 25.17 | .68 | |
| | 24.25 | 26.06 | 1.81 | |
| | 23.65 | 25.43 | 1.78 | |
| | 22.83 | 24.33 | 1.50 | |
| | 24.39 | 25.59 | 1.20 | |
| | 24.36 | 26.06 | 1.70 | |
| | 23.11 | 24.50 | 1.39 | |
| | 23.54 | 24.82 | 1.28 | |
| Average | 23.83 | 25.25 | 1.42 | — |
| 200 | 23.46 | 25.49 | 2.03 | |
| | 23.68 | 25.97 | 2.37 | |
| | 23.56 | 25.40 | 1.84 | |
| Average | 23.57 | 25.62 | 2.05 | +44.4 |

Example 3

*Evaluation of test compounds as animal feed additives for the enhancement of the growth rate of poultry*

One day old Hubbard X Hubbard Crossbred Chicks, randomly allotted to pens of ten chicks (5 males and 5 females) each.

Eight pens of chicks are used for unmedicated controls, and four pens of chicks are used at each level of drug. The duration of the experiment is 28 days.

The controls are offered an unmedicated diet of Broiler Ration No. 453 (composition given below) and water ad libitum. Medicated chicks are offered the same diet containing the test drug at the levels indicated above, and water ad libitum. The weight of the chicks is determined at the beginning and on completion of the experiments. Weight gains and the amount of feed consumed are also determined. The thus obtained data are averaged and summarized in Table V below, wherein the percent improvement in weight gains and feed/gain ratios are given.

| Component | Percent by Weight |
|---|---|
| Ground yellow corn | 53.45 |
| Soybean oil meal (49%) | 28.00 |
| Menhaden fish meal (60%) | 5.0 |
| Corn gluten meal (60%) | 5.00 |
| Dehydrated alfalfa meal (17%) | 2.00 |
| Stabilized fat | 4.00 |
| Dicalcium phosphate | 1.20 |
| Ground limestone | 0.50 |
| Sodium chloride | 0.30 |
| Trace minerals mixture* | 0.05 |
| Vitamin premix** | 0.50 |
| | 100.00 |

| *Trace Mineral Mixture | | 454 g (1 lb)/ton furnishes |
|---|---|---|
| Manganese | 12.50 % | 62.5 ppm |
| Iron | 6.00 | 30.0 |
| Zinc | 5.00 | 25.0 |
| Copper | 0.65 | 3.25 |
| Iodine | 0.35 | 1.75 |
| Cobalt | 0.25 | 1.25 |
| Calcium minimum | 15.30 | |
| Calcium maximum | 17.35 | |

| **Vitamin Premix for 1-ton | Weight in Gram |
|---|---|
| DL Methionine | 453.6 |
| BHT (butylated hydroxy toluene) | 113.6 |
| Vitamin A (30,000 mcg/g) | 100.0 |
| Vitamin $D_3$ (200,000 mcg/g) | 5.0 |
| Vitamin E (20,000 mcg/lb) | 45.4 |
| Riboflavin | 4.0 |
| Niacinamide | 25.0 |

TABLE V

Mean Weight Gain and Feed Efficiency of Control and Test Compound — Treated Chicks

Thirteen-Day Battery Testing

| Treatment | ppm in Diet | Mean Gain (g) | % Control | F/G | % Improvement over Control |
|---|---|---|---|---|---|
| Control | 0 | 266.5 | — | 1.40 | — |
| 4-Amino-α[(*tert*-butylamino)methyl] 3,5-dichlorobenzyl alcohol | 0.3 | 271.8 | +2.0 | 1.40 | 0 |
| | 0.6 | 274.3 | +2.9 | 1.38 | +1.4 |
| | 1.25 | 259.9 | −2.5 | 1.41 | −0.7 |
| | 2.5 | 260.8 | −2.1 | 1.39 | +0.7 |
| | 5.0 | 251.9 | −5.5 | 1.40 | 0 |
| 4-Amino-3,5-dibromo-α[(*tert*-butylamino)methyl]benzyl alcohol hydrochloride | 0.3 | 270.8 | +1.6 | 1.40 | 0 |
| | 0.6 | 271.8 | +2.0 | 1.38 | +1.4 |
| | 1.25 | 267.5 | +0.4 | 1.39 | +0.7 |
| | 2.5 | 265.2 | −0.5 | 1.38 | +1.4 |
| | 5.0 | 270.3 | +1.4 | 1.37 | +2.1 |

Example 4

*Evaluation of test compounds as antilipogenic agents — Mouse tests*

CFI female mice from Carworth Farm are received when they are six weeks old. They are housed ten to a cage in air-conditioned rooms (22°C to 25°C) with automatically controlled lights, 14 hours on and 10 hours off. The basal diet used in these studies is Purina Laboratory Chow (see description below), which is supplied ad libitum.

The following is a description of the diet to which the growth-promoting compounds were added.

DIET

*Guaranteed Analysis*

| | |
|---|---|
| Crude protein not less than | 23.0% |
| Crude fat not less than | 4.5% |
| Crude fibre not more than | 6.0% |
| Ash not more than | 9.0% |

*Ingredients*

Meat and bone meal, dried skimmed milk, wheat germ meal, fish meal, animal liver meal, dried beet pulp, ground extruded corn, ground oat groats, soybean meal, dehydrated alfalfa meal, cane molasses, animal fat preserved with BHA, vitamin $B_{12}$ supplement, calcium pantothenate, choline chloride, folic acid, riboflavin supplement, brewer's dried yeast, thiamin, niacin, vitamin A supplement, D-activated plant sterol, vitamin E supplement, calcium carbonate, dicalcium phosphate, iodized salt, ferric ammonium citrate, iron oxide, manganous oxide, cobalt carbonate, copper oxide, zinc oxide. Water is also allowed ad libitum.

Thirteen days after arrival, the mice are weighed in groups of ten and assigned at random to the different treatments. The concentration of the different compounds in the diet is indicated in the following tables. Twelve days later the mice are weighed again the experiment terminated. At least three cages (30 mice) of untreated controls are included in each test. Test data are provided in Table VI below wherein data are reported as percent body fat, percent change in body fat from controls and gain per mouse in grams.

TABLE VI
Antilipogenic Agent Evaluation and Growth Enhancement Evaluation in Mice

| Compound | Level in Diet (ppm) | Number of Mice per Treatment | Average Initial Weight (g) | Average Final Weight (g) | Gain per Mouse (g) | % Body Fat | Change in % Fat from Control |
|---|---|---|---|---|---|---|---|
| 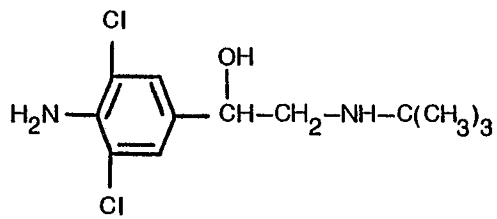 | 0 | 50 | 23.6 | 25.0 | 1.4 | 11.95 | — |
| | 50 | 30 | 23.7 | 26.0 | 2.3 | 11.95 | 0 |
| | 100 | 30 | 23.4 | 25.7 | 2.3 | 10.23 | −14.40 |
| | 200 | 30 | 23.5 | 25.3 | 1.8 | 10.50 | −12.13 |
| | 400 | 30 | 23.4 | 24.9 | 1.4 | 9.10 | −23.80 |
| 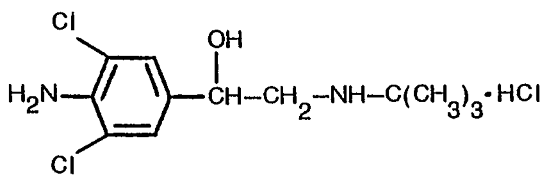 | 0 | 50 | 23.6 | 25.0 | 1.4 | 11.95 | — |
| | 50 | 30 | 23.7 | 26.0 | 2.3 | 11.95 | 0 |
| | 100 | 30 | 23.4 | 25.7 | 2.3 | 10.23 | −14.40 |
| | 200 | 30 | 23.5 | 25.3 | 1.8 | 10.50 | −12.13 |
| | 400 | 30 | 23.4 | 24.9 | 1.4 | 9.10 | −23.80 |

Percent Body Fat Determination of Mice

A. *Preparation of Carcasses:*

Stomach and intestines are removed from each mouse. All other viscera, including skin and fur, remain intact. Each cage of mice (10) are weighed and added to a 1000 ml beaker and autoclaved at 120°C (15 psi) for 30 minutes. Carcasses from each cage are then blended and homogenized. The homogenate is weighed and duplicate 5-gram samples are removed for analysis.

B. *Fat Analysis:*

Fifteen milliliters (ml) of concentrated hydrochloric acid is added to each 5-gram sample and mixed well. Samples are heated in an 84°C water bath for 2 hours. To extract the fat, thirty ml of petroleum ether is added to each samples, 15 ml at a time, and mixed well on a Vortex mixer. The aqueous and organic phases are separated by low speed centrifugation and the ether layer (containing fat) is extracted into tared 30 ml beakers. After evaporating to dryness the beaker containing fat is reweighed to determine grams of fat per five grams of homogenate. Total body fat in the carcass is calculated as follows:

$$\%\,\text{Fat} = \frac{\left[\begin{matrix}\text{grams fat}\\ \text{in sample}\end{matrix}\right]\left[\begin{matrix}\text{grams total}\\ \text{homogenate}\end{matrix}\right]}{\left[\begin{matrix}\text{gram weight}\\ \text{of sample}\end{matrix}\right]\left[\begin{matrix}\text{carcass weight}\\ \text{of mice (g)}\end{matrix}\right]} \times 100$$

Example 5

*Antilipogenic Evaluation of test compounds — Mouse Study*

CFI female mice, 55 days old, are weighed in groups of 10 and allotted to cages to minimize weight variation among cages. Treatments are randomly assigned to cages.

Each of the treatments are tested in 3 replicates, i.e., in 3 cages of 10 mice each. There are 10 cages of 10 control mice.each. Drugs are mixed in the diet at the dosage level indicated. Feed and water are offered ad libitum for the 12-day test period. Feed spilled is collected during the test period. At the end of the test period, the collected feed is weighed and the mean feed consumption per cage of ten mice is determined for each treatment. The mice are weighed as a group of 10 and the weight gain determined. The mice are sacrificed by cervical dislocation. The right uterine fat pad of each mouse is removed. The fat pads for each cage of 10 mice are weighed as a unit.

To establish correlation between the percent reduction in fat pad weights of treated animals and percent reduction in total body fat of treated animals, animals from several treatment groups are evaluated for total body fat using the body fat determination described in Example 5. Data obtained are reported in Table VII for those groups upon which such determination has been made. From percent reduction in fat pad weight and the total fat determinations for the groups tested, it can be seen that a reduction in fat pad weights of animals is generally indicative of a reduction of total body fat of the treated animals.

TABLE VII

Antilipogenic Evaluation of Test Compounds — Mouse Study

| Compound | Dosage (ppm) | % Reduction in Fat Pad Weight vs Controls | % Animal Fat vs Controls |
|---|---|---|---|
| 4-amino-3,5-dibromo-α[(*tert*-butylamino)methyl]benzyl alcohol hydrochloride | 400 | −21.4 | −14.6 |
| | 200 | −27.5* | −18.4* |
| | 100 | −13.9* | −5.3* |
| 4-amino-3,5-dibromo-α[(diisopropylamino)methyl]-benzyl alcohol hydrochloride | 200 | −11.1 | −9.4 |
| 4-amino-α[(*tert*-butylamino)methyl]-3,5-dichlorobenzyl alcohol hydrochloride | 400 | −50.0 | −23.8 |
| | 200 | −28.1 | −12.1 |
| | 100 | −37.9 | −14.4 |
| 4-amino-3,5-dichloro-α-[(methylamino)methyl]-benzyl alcohol hydrochloride | 200 | −14.7 | −9.9 |
| | 100 | −8.8 | −11.5 |

* Average 2 tests

TABLE VII (Continued)
Antilipogenic Evaluation of Test Compounds — Mouse Study

| Compound | Dosage (ppm) | % Reduction in Fat Pad Weight vs Controls | % Animal Fat vs Controls |
|---|---|---|---|
| 4-amino-3,5-dichloro-α-[(diethyl)methyl]benzyl alcohol hydrochloride | 200<br>100 | –64.7<br>–41.2 | |
| 4-amino-α[(*sec*-butylamino)methyl]-3,5-dichlorobenzyl alcohol | 200<br>100 | –56.2<br>–18.2 | –36.3<br>–19.3 |
| 4-amino-3,5-dichloro-α-[(diallylamino)methyl]benzyl alcohol hydrochloride | 200 | –12.0 | |
| 4-amino-3,5-dichloro-α-[(benzylamino)methyl]benzyl alcohol hydrochloride | 200<br>100 | –17.7<br>–21.1 | –5.4<br>–1.7 |
| 4-amino-α-[(butylamino)methyl]-3,5-dichlorobenzyl alcohol | 200<br>100 | –21.54<br>–24.7 | –16.78<br>–13.08 |
| 4-amino-3,5-dichloro-α-[(isopropylamino)methyl]benzyl alcohol | 200<br>100 | –50.2<br>–36.9 | –25.5<br>–20.4 |
| α-[(allylamino)methyl]-4-amino-3,5-dichlorobenzyl alcohol | 200<br>100 | –16.5<br>–18.3 | |
| 4-amino-α-[1-(*tert*-butylamino)ethyl]-3,5-dichlorobenzyl alcohol hydrochloride | 100 | –18.8 | |
| α-[(*t*-butylamino)methyl]-3,5-dichlorobenzyl alcohol hydrochloride | 200<br>100 | –22.5<br>–14.8 | |
| 4-amino-3-bromo-α-[(*t*-butylamino)methyl]-5-chloro-benzyl alcohol hydrochloride | 200<br>100 | –17.8<br>–18.7 | |
| m-hydroxy-α-[(isopropylamino)methyl]benzyl alcohol | 400<br>200<br>100 | –19.8<br>–26.2<br>–7.5 | |
| 4-amino-N-*t*-butyl-3,5-dichlorophenethylamine hydrochloride | 50 | –24.8 | |
| 4-amino-3,5-dichloro-α-[(cyclopropylamino)methyl]-benzyl alcohol | 100 | –30.7 | |
| 4-[2-(*t*-butylamino)-1-hydroxyethyl]-2′-chloroacetanilide | 200<br>100 | –6.7<br>–12.1 | |
| 4-amino-3,5-dichloro-α-[(cyclopentylamino)methyl]-benzyl alcohol | 200<br>50 | –24.5<br>–4.7 | |
| 4-amino-3,5-dichloro-α-{[(2-hydroxyethyl)amino]-methyl}benzyl alcohol | 200<br>50 | –15.2<br>–7.4 | |
| 4-amino-α-[(*t*-butylamino)methyl]-3,5-diiodobenzyl alcohol hydrochloride | 200<br>100 | –32.6<br>–26.6 | |
| 4-amino-N-*t*-butyl-3,5-dichloro-β-methoxyphenethyl-amine hydrochloride | 200<br>50 | –13.4<br>–21.7 | |

Example 7

*Antilipogenic evaluation of test compounds — Rat Study*

The procedure employed and the diet used for evaluation of test compounds as antilipogenic agents mice, are described in Example 1, excepting that the treatment period is fourteen days and 10 rats, one per cage, are used for each treatment.

Percent body fat is determined in the same manner as described in Example 4, excepting that the skin and organs are removed before the carcasses are homogenized.

Results of this study are reported in Table VIII below.

TABLE VIII
Antilipogenic Evaluation of Test Compounds and Growth Rate Evaluation in Rats

| Compound | Level in Diet (ppm) | Number of Rats per Treatment | Average Initial Weight (g) | Average Final Weight (g) | Average Gain per Rat (g) | % Fat in Eviscerated Carcass | Change in Fat from Control |
|---|---|---|---|---|---|---|---|
| 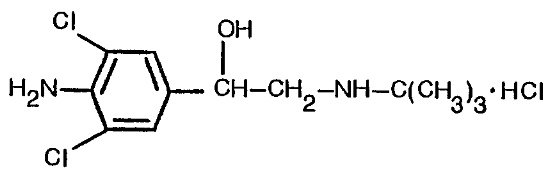 | 0 | 10 | 72.7 | 149.1 | 76.4 | 4.67 | — |
| | 25 | 10 | 78.3 | 159.3 | 81.0 | 3.04 | –34.9 |
| | 100 | 9 | 76.6 | 159.8 | 83.2 | 2.54 | –42.0 |
| | 400 | 10 | 73.2 | 146.4 | 73.2 | 2.71 | –45.6 |

Example 8

Evaluation of test compounds as animal feed additives for the enhancement of growth rate and improvement in feed efficiency of mice.

Four-week old female outbred rats (5-gram range) from Charles River Breeding Laboratories, 251 Ballardvale Street, Wilmington, Massachusetts 01887, are housed 2/cage in air-conditioned rooms (22°C to 25°C with automatically controlled lights, 14 hours on and 10 hours off. The basal diet used in these studies is Purina Laboratory Chow which is supplied ad libitum. Water is also given ad libitum.

Four days after arrival, the animals are weighed and allotted to treatment groups to minimize weight variation. Ten rats are used per treatment group. Drugs are administered in the feed at 2 ppm, 10 ppm and 50 ppm for a period of 12.5 weeks. Animals are weighed weekly and feed consumption corrected for spillage recorded daily. The results of this trial are shown below in Table IX.

TABLE IX

Evaluation of Test Compounds as Animal Feed Additives for the Enhancement of Growth Rate and Improvement in Feed Efficiency — Mice

| Treatment | Dose ppm | Gain[a] (g) | Feed Consumption[b] (g) | Feed/Gain % Improvement |
|---|---|---|---|---|
| Control | | 157 | 1304 | 8.31 |
| 4-Amino-α-(*tert*-butylaminomethyl)-3,5-dichlorobenzyl alcohol hydrochloride | 2 | 178 (+13.4%) | 1443 (+10.7%) | 8.11 (+2.4%) |
| | 10 | 186 (+18.5%) | 1467 (+11.5%) | 7.89 (+5.1%) |
| | 50 | 175 (+11.5%) | 1394 (+6.9%) | 7.97 (+4.1%) |
| 4-Amino-3,5-dibromo-α-[(*tert*-butylamino)-methyl]benzyl alcohol hydrochloride | 2 | 164 (+4.5%) | 1362 (+4.5%) | 8.3 (0.1%) |
| | 10 | 185 (+7.8%) | 1459 (+11.9%) | 7.89 (+5.1%) |
| | 50 | 184 (+17.2%) | 1416 (+8.6%) | 7.70 (+7.3%) |

[a]Values given are the total average gain (g) per rat for the entire experimental period.
[b]Values given are the total average feed consumed per rat for the entire experimental period.
Figures in parentheses are % improvement over control.

Example 9

*α-[(Tert-butylamino)methyl]-3,5-dichlorobenzyl Alcohol Hydrochloride*

A solution containing 3.5 g of 3,5-dichlorostyrene oxide in 50 ml of absolute ethanol and 20 ml of *t*-butylamine is heated gently at reflux for 8 hours and the mixture is evaporated to dryness. The clear yellow syrup is dissolved in 75 ml of ethanol and 25 ml of $H_2O$, and the solution is cooled to 5°C and acidified with 3N HCl. This solution is evaporated to dryness *in vacuo* and the residual white solid is recrystallized from acetone to afford 2.81 g, m.p. 218—221°C.

| | | | |
|---|---|---|---|
| *Anal.* Called for $C_{12}H_{17}NOCl_2HCl$: | C, 48.26; | H, 6.08; | H, 4.69. |
| Found: | C, 48.49; | H, 6.17; | N, 4.66. |

The free base of the title compound is obtained by neutralization of the title compound with aqueous 10% NaOH. Other salts of the free base are then obtained by treatment of the free base in the above-mentioned procedure (aqueous ethanol) with addition to the appropriate acids, such as $H_2SO_4$, $H_3PO_4$, $NHO_3$, $CH_3SO_3H$, toluenesulfonic acid and pamoic acid.

The intermediate 3,5-dichlorostyrene oxide needed for preparing the title compound is made by reducing 28.4 g of 3,5-dichlorophenacyl bromide in 125 ml of absolute ethanol at 5°C with 8 g of $NaBH_4$, added portionwise. After the addition is completed, the reaction mixture is stirred 16 hours at ambient temperature, which is obtained by gradual melting of the ice bath overnight. The mixture is quenched with 100 ml of $H_2O$, the aqueous mixture is cooled to 5°C, and carefully acidified to pH 3 with concentrated HCl. The mixture is extracted wtih 300 ml of $CH_2Cl_2$ and the extract is dried over $MgSO_4$, filtered, and evaporated to dryness *in vacuo* to afford the epoxide as a clear yellow oil.

The phenacyl bromide intermediate for the above-mentioned styrene oxide is prepared by brominating 10 g of 3,5-dichloroacetophenone in 50 ml of $CHCl_3$/50 ml of EtOAc with 23.6 g of $CuBr_2$. The mixture is heated at reflux for 2.5 hours and cooled to room temperature. After stirring for 16 hours at room temperature, the mixture is cooled in ice for 2 hours and filtered. The filter cake is washed with 50 ml of $CHCl_3$ and the combined filtrates are twice decolorized with activated carbon, filtered, and evaporated to dryness *in vacuo* to afford the orange oil of the 3,5-dichlorostyrene oxide.

Example 10

The following 3,5-dichlorophenyl compounds (A) related to the title compound of Example 9 are prepared by the method described in Example 6 by substituting *t*-butyl amine with $R_2R_3NH$ amines.

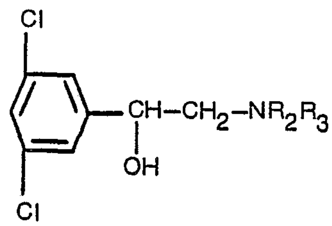

A

| Compound | $R_2$ | $R_3$ |
|---|---|---|
| 1 | H | H |
| 2 | H | $CH_3$ |
| 3 | H | $C_2H_5$ |
| 4 | H | i-$C_3H_7$ |
| 5 | H | *n*-$C_3H_7$ |
| 6 | H | n-$C_6H_{13}$ |
| 7 | H | cyclohexyl |
| 8 | H | $CH_2—CH{=}CH_2$ |
| 9 | H | $CH_2—CH{=}CH—CH_3$ |
| 10 | H | $CH_2C{=}CH$ |
| 11 | H | phenyl |
| 12 | H | methoxypropyl |
| 13 | H | benzyl |
| 14 | $CH_3$ | $CH_3$ |
| 15 | $C_2H_5$ | $C_2H_5$ |
| 16 | $CH_2CH{=}CH_2$ | $CH_2CH{=}CH_2$ |
| 17 | *i*-$C_3H_7$ | i-$C_3H_7$ |
| 18 | $CH_2—CH{=}CH_2$ | $—CH_2—CH{=}CH_2$ |
| 19 | H | cyclopropyl |
| 20 | $—CH_2—CH_2—O—CH_2—CH_2—$ | |
| 21 | H | n-butyl |
| 22 | H | $C(CH_3)_2-CH_2$ 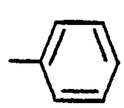 |

Example 11

*α-[(Tert-butylamino)methyl]-3,5-dibromobenzyl Alcohol Hydrochloride*

This title compound is prepared from 3,5-dibromostyrene oxide in the same manner as described in Example 9. The starting materials for this styrene oxide are similarly prepared starting with 3′,5′-dibromoacetophenone.

The corresponding α-[(isopropylamino)methyl]-3,5-dibromobenzyl alcohol hydrochloride is prepared by substituting isopropyl amine for *t*-butyl amine.

Example 12

*m-Hydroxy-α-[(isopropylamino)methyl]benzyl Alcohol Hydrochloride*

In 135 ml of 95% ethanol, 36.75 g of *m*-hydroxyacetophenone, 36.5 g of benzyl chloride, 1.75 g of KI, and 24.6 g of $K_2CO_3$ are stirred and heated at reflux for 5 hours. The mixture is cooled, evaporated *in vacuo* to remove ethanol and 100 ml of $H_2O$ is added. The mixture is then extracted with diethyl ether three times to afford 350 ml of extract, which is further washed with 50 ml of $H_2O$, saturated $NaHCO_3$ solution (2 × 50 ml), 50 ml of $H_2O$, and 50 ml of brine in succession. The filtrate is dried over $Na_2SO_4$ and evaporated to dryness. The residual oil is distilled to afford 49.13 g of *m*-benzyloxyacetophenone, b.p. 145—147°C/0.2 mm. Bromination of 186 g of this acetophenone is accomplished with 349 g of $CuBr_2$ in 1 l of $CHCL_3$/1.5 l of ethanol heated at reflux. A $N_2$ sweep is used to remove HBr generated. After 4 hours, the mixture is filtered and the filter cake is washed with $CHCl_3$ (2 × 100 ml). The filtrate is evaporated *in vacuo* to afford an oil, which is dissolved in 200 ml of absolute ethanol (2 × 50 ml), and dried to afford 64.28 g m-benzyl-oxyphenacyl bromide, m.p. 57—58°C. Further cooling of the filtrate affords 34 g. A 64 g-sample of the phenacyl bromide is added to a stirred mixture containing 212 ml of *i*-propylamin in 425 ml of ethanol under $N_2$ atmosphere at 5°C. The temperature rises to 12°C and a clear solution is obtained. The solution is poured into ice (2 L) containing 500 ml of concentrated HCl and 1500 ml of $H_2O$. After stirring for 20 minutes, the mixture is filtered and the solid is washed with $H_2O$. On drying this gives 98.64 g, m.p. 200—203°C dec. This solid is dissolved in 400 ml of refluxing methanol, 400 ml of isopropyl alcohol is added, and the solution is concentrated to 400 ml. On cooling and collecting crystals, 54.36 of ketoamine melting at 213—215° dec is obtained. This material (16 g) is added to 150 ml of methanol which contains 2 g of 5% Pd/carbon and hydrogenated in a Paar vessel at 42 p.s.i.g. of $H_2$. The mixture is filtered and the filtrate is evaporated. The residue is mixed with 50 ml of isopropyl alcohol and evaporated to dryness to afford a syrup, which is mixed with 100 ml of ethanol. They crystals are collected, washed with diethyl ether and dried to give 10.77 g, m.p. 129—132°C, of the title compound.

By substituting *tert*-butylamine for isopropylamine, *m*-hydroxy-α-[(*tert*-butylamino)methyl]benzyl alcohol hydrochloride, m.p. 150—154°C dec, is obtained. Substitution of isopropylamine with diisopropylamine, benzylamine and allyamine affords *m*-hydroxy-α-[(diisopropylamino)methyl]-benzyl alcohol, *m*-hydroxy-α-[(benzylamino)methyl]benzyl alcohol, and *m*-hydroxy-α-[(allylamino)methyl]-benzyl alcohol hydrochlorides, respectively.

Example 13

*4-Amino-α[(*tert*-butylamino)methyl]-3,5-diiodobenzyl Alcohol Hydrochloride*

In 10 ml of acetic acid, 0.42 g of *p*-amino-α-[(*tert*-butylamino)methyl]benzyl alcohol is stirred under $N_2$ atmosphere and 0.48 g of N,N-dichlorobenzenesulfonamide and 0.6 g of NaI are stirred under $N_2$ atmosphere for 20 minutes. After 3 days, the mixture is poured into ice and the mixture is basified with 50% aq. NaOH. This mixture is extracted with $CH_2Cl_2$ (3 × 25 ml) and chromatographed on a $SiO_2$ plate using 1% $NH_4OH$/20% $CH_3OH$/$CH_2Cl_2$ to afford 0.22 g of the title compound. The reaction is repeated on a larger scale (8X) and the eluted crude product is dissolved in 100 ml of ethanol/10 ml of $H_2O$, stirred and 10% HCl is added to give pH 3. The mixture is evaporated to dryness *in vacuo*. Isopropylalcohol is added and the mixture is evaporated to dryness. This process is repeated twice and the residue is crystallized from methanol/isopropyl alcohol by allowing methanol to evaporate until crystals from (methanol is used to dissolve the crude material before isopropyl alcohol is added). On cooling, 2 g of the title compound is obtained melting at 187°C dec.

| | | | |
|---|---|---|---|
| *Anal.* Calc'd for $C_{12}H_{19}ClI_2N_2O$: | C, 29.02; | H, 2.86; | N, 5.64. |
| Found: | C, 29.11; | H, 3.64; | N, 5.64. |

Example 14

*α-[(Tert-butylamino)methyl]-3,5-dichlorobenzyl Alcohol Hydrochloride*

An alternate procedure for preparing the title compound and the compounds described in Example 9 is exemplified. Thus, 10 g of 4-amino-α-[(*tert*-butylamino)methyl]-3,5-dichlorobenzyl alcohol is added to 100 ml of 50—52% $H_3PO_2$ and the mixture is stirred and cooled to 8°C in ice while 2.77 g of $NaNO_2$ in 15 ml of $H_2O$ is added over 65 minutes. Foaming occurs and is controlled with antifoaming silicone. After 20 minutes, the mixture is stirred 2 hours without cooling. The mixture is then poured into ice-$H_2O$ mixture and 50% aq. NaOH solution is added until the mixture is alkaline. The alkaline mixture is extracted with $CH_2Cl_2$ three times to give 200 ml of solution, which is washed with

25 ml of 2% NaOh and dried over $MgSO_4$ and evaporated to dryness *in vacuo* to give 9.13 g of brown oil. On standing, the oil solidifies, and it is dissolved in 100 ml of ethanol containing 10 ml of $H_2O$. The solution is acidified to pH 3 with 10% HCl and evaporated to dryness. The residue is treated with 50 ml of isopropyl alcohol and evaporated to dryness. This procedure is repeated to afford an off-white solid which is dissolved in methanol. The solution is evaporated *in vacuo* to afford a syrup, which is diluted with 50 ml of isopropyl alcohol and allowed to stand. The crystals which form are collected, washed with isopropyl alcohol and dried to yield 7.8 g, m.p. 217—221°C dec., of the title compound.

The compound described in Example 6 is similarly prepared. Deamination of 4-amino-3,5-dibromo-α-[(*tert*-butylamino)methyl]benzyl alcohol affords 3,5-dibromo-α-[(*tert*-butylamino)methyl]-benzyl alcohol, m.p. 249—251°C dec.

Example 15

*4-Amino-3,5-dichloro-β-methoxyphenethylamine hydrochloride*

Under $N_2$ atmosphere, 11 g of 4-amino-α-[(*tert*-butylamino)methyl]-3,5-dichlorobenzyl chloride is added to 75 ml of methanol at 0°C. After 20 minutes, the cooling bath is removed and the reaction mixture is stirred at ambient temperature. After the reaction is completed, the mixture is evaporated to dryness *in vacuo*. The residue is stirred in 75 ml of $H_2O$ and the mixture is made alkaline with 6N NaOH solution and extracted with $CH_2Cl_2$ (3 x 50 ml). The organic phases are dried over $MgSO_4$ and evaporated to dryness to afford an orange oil. This oil is dissolved in 150 ml of absolute EtOH and acidified with HCl/isopropyl alcohol solution to pH 2. The solution is evaporated to dryness and the residue is stirred in 75 ml of ethyl acetate. After cooling, this affords a pale yellow solid which is collected to give 6.97 g of the title compound, m.p. 195—198°C dec.

Similarly, substitution of ethyl alcohol, isopropyl alcohol, *n*-butyl alcohol and *n*-hexyl alcohol affords the corresponding β-ethoxy, β-isopropoxy, *n*-butoxy, and *n*-hexyloxy phenethylamine hydrochlorides.

Example 16

*4-Amino-α-[(tert-butylamino)methyl]-3,5-dichlorobenzyl chloride*

Under $N_2$ atmosphere, 27.72 g of 4-amino-α-[(*tert*-butylamino)methyl]-3,5-dichlorobenzyl alcohol is added to 200 ml of thionyl chloride stirred at 0—5%C. After addition is completed, the reaction mixture is stirred at ambient temperature for 3 hours. Subsequently, the mixture is evaporated to dryness *in vacuo* to afford 37.34 g of yellow solid, which is used as is.

Example 17

*Alternate Procedure for 4-Amino-3,5-dichloro-β-methoxyphenethylamine hydrochloride*

I. 100 ml of methanol, 10 g of 4-amino-α-[(*tert*-butylamino)methyl]-3,5-dichlorobenzyl alcohol is stirred in an ice bath and dry HCl gas is introduced into the solution. After saturation of the solution, the mixture is stirred at room temperature for an hour and evaporated to dryness. The solid is then stirred in ethyl acetate to afford the title product, which is collected by filtration.

## Claims

1. A method for enhancing the growth rate and for reducing the fat deposition in warmblooded animals by administrating to said animals a compound of the following formula:

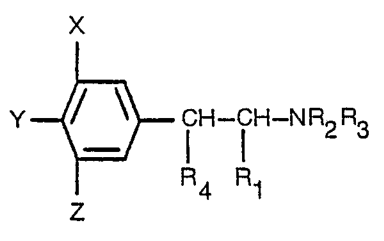

(I)

wherein X is hydrogen or halogen; Y is hydrogen, $NH_2$ or $NHCOR_5$; Z is hydrogen, halogen or OH; $R_1$ is hydrogen or $C_1$—$C_4$ alkyl; $R_2$ is hydrogen, $C_1$—$C_4$ alkyl (straight or branched-chain) or $C_3$-$C_4$ alkenyl; $R_3$ is hydrogen, $C_1$—$C_6$ alkyl (straight or branched-chain), $C_3$—$C_6$-cycloalkyl, methoxypropyl, $C_3$—$C_4$ alkenyl, phenyl, 2-hydroxyethyl, α-α-dimethylphenethyl or benzyl; and when $R_2$ and $R_3$ are taken together with the nitrogen to which they are attached, they may represent morpholino or N'-$C_1$—$C_4$ alkylpiperazino; $R_4$ is hydrogen, hydroxyl or $OR_6$; $R_5$ is hydrogen or $C_1$—$C_4$ alkyl; $R_6$ is $C_1$—$C_6$ alkyl; with the provisos that when $R_3$ is phenyl, 2-hydroxyethyl, α,α-dimethylphenethyl, cycloalkyl $C_3$—$C_6$, benzyl or methoxypropyl, $R_2$ is hydrogen; and when Z is OH, X and Y are hydrogen; and when Y is $NHCOR_5$, at least one of X and Z is hydrogen: and provided also that at least one of X, Y and Z represents a substituent other than hydrogen, racemic mixtures of the above-identified compounds and the optically active isomers and non-toxic, pharmacologically acceptable acid addition salts thereof.

2. A method according to Claim 1, characterized in that a salt of 4-amino-$\alpha$-[(*tert*-butylamino)-methyl]-3,5-dichlorobenzyl alcohol is administrated.

3. A method according to Claim 1, characterized in that 4-amino-$\alpha$-[*tert*-butylamino)methyl]-3,5-dichlorobenzyl alcohol hydrochloride is administrated.

4. A method according to Claim 1, characterized in that 4-amino-3,5-dibromo-$\alpha$-[(diisopropylamino)methyl]benzyl alcohol hydrochloride is administrated.

**Revendications**

1. Un procédé pour favoriser la croissance des animaux à sang chaud et pour en réduire la matière grasse, par administration auxdits animaux d'un composé de formule suivante:

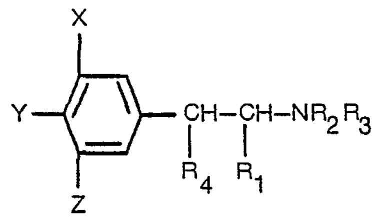

(I)

dans laquelle X est l'hydrogène ou un halogène: Y est un hydrogène, $NH_2$ ou $NHCOR_5$; Z est l'hydrogène, un halogène ou OH; $R_1$ est l'hydrogène ou un alkyle en $C_1$—$C_4$; $R_2$ est l'hydrogène, un alkyle en $C_1$—$C_4$ (à chaîne droite ou ramifiée) ou un alcényle en $C_3$—$C_4$; $R_3$ est l'hydrogène, un alkyle en $C_1$—$C_4$ (à chaîne droite ou ramifiée), un cycloalkyle en $C_3$—$C_6$, un méthoxypropyle, un alcényle en $C_3$—$C_4$, un phényle, un 2-hydroxyéthyle, un $\alpha,\alpha$-diméthylphénéthyle ou un benzyle; et lorsque $R_2$ et $R_3$ sont pris ensemble avec l'atome d'azote auquel ils sont fixés, ils peuvent représenter un morpholino ou un N'-(alkyl en $C_1$—$C_4$)pipérazino; $R_4$ est l'hydrogène, hydroxy ou $OR_6$; $R_5$ est l'hydrogène ou un alkyle en $C_1$—$C_4$; $R_6$ est un alkyle en $C_1$—$C_6$, sous réserve que lorsque $R_3$ est un phényle, un 2-hydroxyéthyle, un $\alpha,\alpha$-diméthylphénétyle, un cycloalkyle en $C_3$—$C_6$, un benzyle ou un méthoxypropyle, $R_2$ est l'hydrogène; et lorsque Z est OH, X et Y sont l'hydrogène; et lorsque Y est $NHCOR_5$, au moins un de X et Z est l'hydrogène; et sous réserve également qu'au moins un de X, Y et Z représente un substituant autre qu'un hydrogène, de mélanges racémiques des composé identifiés ci-dessus et de leurs isomères optiquement actifs et de leurs sels d'addition avec des acides non toxiques pharmacologiquement acceptables.

2. Un procédé selon la revendication 1, caractérisé en ce qu'on administre un sel d'alcool 4-amino-$\alpha$-[(tert-butylamino)méthyl]-3,5-dichlorobenzylique.

3. Un procédé selon la revendication 1, caractérisé en ce qu'on administre le chlorhydrate de l'alcool 4-amino-$\alpha$-[(tert-butylamino)méthyl]-3,5-dichlorobenzylique.

4. Un procédé selon la revendication 1, caractérisé en ce qu'on administre le chlorhydrate de l'alcool 4-amino-3,5-dibromo-$\alpha$-[(diisopropylaminométhyl]benzylique.

**Patentansprüche**

1. Verfahren zur Beschleunigung des Wachstums und zur Verringerung der Fettablagerung bei warmblütigen Tieren durch Verabreichung einer Verbindung der folgenden Formel an die Tiere:

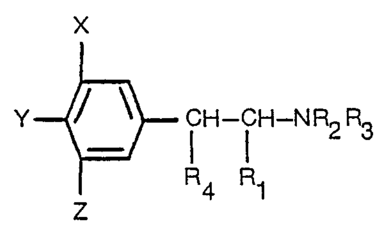

(I)

wobei X für Wasserstoff oder Halogen steht; Y für Wasserstoff, $NH_2$ oder $NHCOR_5$ steht; Z für Wasserstoff, Halogen oder OH steht; $R_1$ für Wasserstoff oder $C_{1-4}$-Alkyl steht; $R_2$ für Wasserstoff, $C_{1-4}$-Alkyl (geradkettig oder verzweigtkettig) oder $C_{3-4}$-Alkenyl steht; $R_3$ für Wasserstoff, $C_{1-6}$-Alkyl (geradekettig oder verzweigtkettig), $C_{3-6}$-Cycloalkyl, Methoxypropyl, $C_{3-4}$-Alkenyl, Phenyl, 2-Hydroxyäthyl, $\alpha,\alpha$-Dimethylphenäthyl oder Benzyl steht und wobei $R_2$ und $R_3$ gemeinsam mit dem Stickstoff, an das sie gebunden sind, Morpholino oder N'-$C_{1-4}$-Alkylpiperazino bedeuten können; $R_4$ für Wasserstoff, Hydroxyl oder $OR_6$ steht; $R_5$ für Wasserstoff oder $C_{1-4}$-Alkyl steht; $R_6$ für $C_{1-6}$-Alkyl steht; mit den Maßgaben, daß dann, wenn $R_3$ für Phenyl, 2-Hydroxyäthyl, $\alpha,\alpha$-Dimethylphenäthyl, Cycloalkyl $C_{3-6}$, Benzyl oder Methoxypropyl steht, $R_2$ Wasserstoff ist; und daß dann, wenn Z für OH steht, X und Y

Wasserstoff sind; und daß dann, wenn Y für $NHCOR_5$ steht, mindestens einer der Reste X und Z Wasserstoff ist und mit der weiteren Maßgabe, daß mindestens einer der Reste X, Y und Z für einen Substituenten steht, der nicht Wasserstoff ist; racemische Gemische der oben identifizierten Verbindungen und die optisch aktiven Isomeren und nicht-toxischen, pharmakologisch akzeptablen Säureadditionssalze derselben.

2. Verfahren nach Anspruch 1, dadurch gekennzeichnet, daß ein Salz von 4-Amino-$\alpha$-[(tert.-butylamino)methyl]-3,5-dichlorbenzylalkohol verabreicht wird.

3. Verfahren nach Anspruch 1, dadurch gekennzeichnet, daß 4-Amino-$\alpha$-[tert.-butylamino)-methyl]-3,5-dichlorbenzylalkoholhydrochlorid verabreicht wird.

4. Verfahren nach Anspruch 1, dadurch gekennzeichnet, daß 4-Amino-3,5-dibrom-$\alpha$-[(diisopropylamino)methyl]benzylalkoholhydrochlorid verabreicht wird.